# EUROPEAN PATENT APPLICATION

(11) **EP 3 197 240 A1**
(43) Date of publication of application: **26.07.2017**
(21) Application number: 15830448.5
(22) Date of filing: 06.08.2015
(51) Int. Cl.: H04W 92/18, H04W 56/00

(54) **BASE STATION AND USER TERMINAL**

(30) Priority: 08.08.2014 US 201462035110 P
(71) Applicant: Kyocera Corporation, Kyoto-shi, Kyoto 612-8501 (JP)
(72) Inventor: MATSUMOTO, Naohisa, Kyoto-shi Kyoto 612-8501 (JP); ADACHI, Hiroyuki, Kyoto-shi Kyoto 612-8501 (JP)
(74) Representative: Schwabe - Sandmair - Marx
(86) International application number: PCT/JP2015/072418
(87) International publication number: WO 2016/021701

(57) **Abstract**

A base station according to the present invention is used in a mobile communication system that supports a D2D proximity service. The base station includes a transmitter that transmits, to a user terminal which is located in a cell of the base station and is configured as a D2D synchronization source, an instruction to stop transmitting a D2D synchronization signal when a predetermined condition is satisfied.

## Description

### TECHNICAL FIELD

The present invention relates to a user terminal and a base station used in a mobile communication system that supports a D2D proximity service.

### BACKGROUND ART

In 3GPP (3rd Generation Partnership Project) which is a project aiming to standardize a mobile communication system, the introduction of a Device to Device (D2D) proximity service is discussed as a new function in Release 12 and later (see Non Patent Document 1).

The D2D proximity service (D2D ProSe) is a service enabling direct device-to-device communication within a synchronization cluster including a plurality of synchronized user terminals. The D2D proximity service includes a D2D discovery procedure (Discovery) in which a proximal terminal is discovered and D2D communication (Communication) that is direct Device-to-Device communication.

Further, when a user terminal is a D2D synchronization source, the user terminal transmits a D2D synchronization signal. When a user terminal is a D2D non-synchronization source, the user terminal performs synchronization on the basis of the received D2D synchronization signal.

### [Prior Art Documents]

### [Non Patent Document]

[Non Patent Document 1] 3GPP technical report "TR 36.843 V12.0.1" March 27, 2014

### SUMMARY OF INVENTION

A base station according to one embodiment is used in a mobile communication system that supports a D2D proximity service. The base station includes a transmitter that transmits, to a user terminal which is located in a cell of the base station and configured as a D2D synchronization source, an instruction to stop transmitting a D2D synchronization signal when a predetermined condition is satisfied.

### BRIEF DESCRIPTION OF DRAWINGS

[Fig. 1] Fig. 1 is a configuration diagram of an LTE system according to an embodiment.
[Fig. 2] Fig. 2 is a block diagram of a UE according to the embodiment.
[Fig. 3] Fig. 3 is a block diagram of an eNB according to the embodiment.
[Fig. 4] Fig. 4 is a protocol stack diagram according to the embodiment.
[Fig. 5] Fig. 5 is a configuration diagram of a radio frame according to the embodiment.
[Fig. 6] Fig. 6 is a diagram illustrating a D2D synchronization signal according to the present embodiment.
[Fig. 7] Fig. 7 is a diagram illustrating an arrangement of radio resources used for transmitting the D2D synchronization signal according to the present embodiment.
[Fig. 8] Fig. 8 is a diagram illustrating an arrangement of radio resources used for transmitting the D2D synchronization signal according to the present embodiment.
[Fig. 9] Fig. 9 is an explanatory diagram illustrating an operation according to the embodiment.
[Fig. 10] Fig. 10 is a diagram illustrating steps of the proposed procedure according to an appendix.
[Fig. 11] Fig. 11 is a diagram illustrating the signaling of the proposed procedure according to an appendix.

### DESCRIPTION OF EMBODIMENTS

### [Overview of Embodiments]

A base station according to embodiments is used in a mobile communication system that supports a D2D proximity service. The base station includes a transmitter that transmits an instruction to stop transmitting a D2D synchronization signal, to a user terminal which is located in a cell of the base station and is configured as a D2D synchronization source.

The transmitter may transmit the instruction to the user terminal when a condition is satisfied, the condition indicating that the user terminal leaves from a cell edge of the cell.

The transmitter may transmit the instruction to the user terminal when a measurement result of a received signal from the user terminal exceeds a threshold value.

The transmitter may transmit the instruction to the user terminal when a measurement result of a received signal from the cell exceeds a threshold value, the measurement result included in a measurement report from the user terminal.

The base station may further include a controller that configures the user terminal as the D2D synchronization source. The transmitter may transmit the instruction to the user terminal when the base station receives, from the user terminal, a request for releasing a configuration of the D2D synchronization source.

A user terminal according to embodiments is used in a mobile communication system that supports a D2D proximity service. The user terminal includes a controller that controls to start transmitting a D2D synchronization signal when the user terminal is located in a cell and is configured as a D2D synchronization source. The controller controls to stop transmitting the D2D synchronization signal when a predetermined condition is satisfied.

The predetermined condition may be a condition that the user terminal receives, from a base station managing the cell, an instruction to stop transmitting the D2D synchronization signal.

The predetermined condition may be a condition indicating that the user terminal leaves from a cell edge of the cell.

The predetermined condition may be that a measurement result of a received signal in the user terminal exceeds a threshold value, the received signal received from the cell.

The predetermined condition may be that a measurement result of a received signal in the user terminal exceeds a threshold value, the received signal received from other cell.

The predetermined condition may be that a predetermined time periods passes since starting transmitting the D2D synchronization signal.

The predetermined condition may be that number of other user terminals is less than a threshold value, wherein the other user terminals are transmission sources of D2D related signals received by the user terminal and are located out of the cell.

The controller may transmit a transmission stop report of the D2D synchronization signal to the cell after stopping transmitting the D2D synchronization signal.

A user terminal according to embodiments is used in a mobile communication system that supports a D2D proximity service. The user terminal includes a controller that stops transmitting a D2D synchronization signal from the user terminal in response to receive other D2D synchronization signal derived from a base station while the user terminal is in out of cell coverage, and then synchronizes to the other D2D synchronization signal derived from the base station.

### [Embodiment]

An embodiment in which the present invention is applied to an LTE system will be described, below.

### (System configuration)

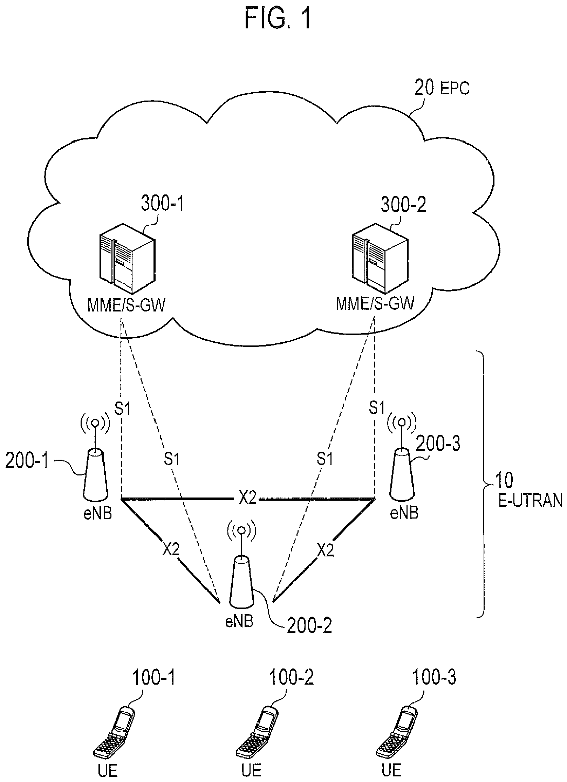

Fig. 1 is a configuration diagram of the LTE system according to an embodiment. As illustrated in Fig. 1, the LTE system according to the embodiment includes UE (User Equipment) 100, E-UTRAN (Evolved-UMTS Terrestrial Radio Access Network) 10, and EPC (Evolved Packet Core) 20.

The UE 100 corresponds to a user terminal. The UE 100 is a mobile communication device, which performs radio communication with a cell (a serving cell) to which the UE 100 connects. The configuration of the UE 100 will be described later.

The E-UTRAN 10 corresponds to a radio access network. The E-UTRAN 10 includes eNB 200 (an evolved Node-B). The eNB 200 corresponds to a base station. The eNBs 200 are connected mutually via an X2 interface. The configuration of the eNB 200 will be described later.

The eNB 200 manages one or a plurality of cells, and performs radio communication with the UE 100 that establishes a connection with a cell of the eNB 200. The eNB 200 has a radio resource management (RRM) function, a routing function of user data, a measurement control function for mobility control and scheduling and the like. The "cell" is used as a term indicating a smallest unit of a radio communication area, and is also used as a term indicating a function of performing radio communication with the UE 100.

The EPC 20 corresponds to a core network. The E-UTRAN 10 and the EPC 20 constitute a network of the LTE system (LTE network). The EPC 20 includes MME (Mobility Management Entity)/S-GW (Serving-Gateway) 300. The MME performs different types of mobility control and the like for the UE 100. The S-GW performs transfer control of the user data. The MME/S-GW 300 is connected to the eNB 200 via an S1 interface.

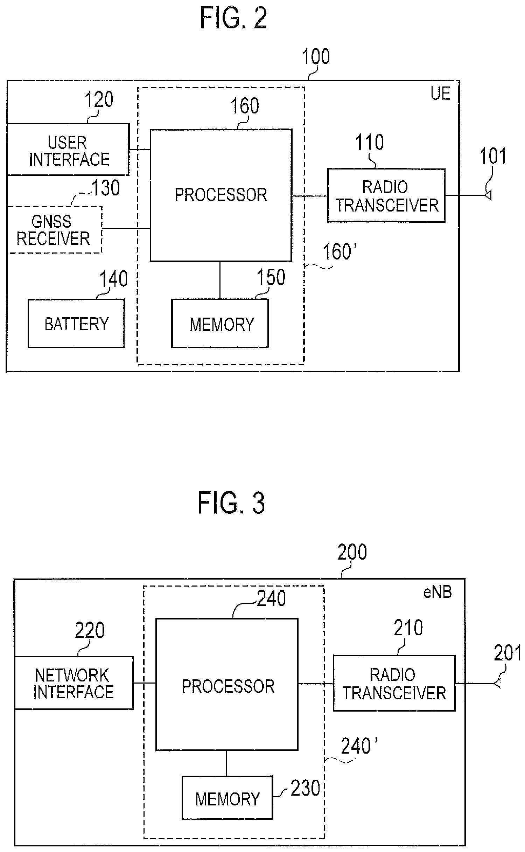

Fig. 2 is a block diagram of the UE 100. As illustrated in Fig. 2, the UE 100 includes an antenna 101, a radio transceiver 110, a user interface 120, a GNSS (Global Navigation Satellite System) receiver 130, a battery 140, a memory 150, and a processor 160. The memory 150 corresponds to a storage, and the processor 160 corresponds to a controller. The UE 100 may not necessarily have the GNSS receiver 130. Furthermore, the memory 150 may be integrally formed with the processor 160, and this set (that is, a chip set) may be called a processor 160' that constitutes the controller.

The antenna 101 and the radio transceiver 110 are used to transmit and receive a radio signal. The radio transceiver 110 converts a baseband signal (a transmission signal) output from the processor 160 into a radio signal, and transmits the radio signal from the antenna 101. Furthermore, the radio transceiver 110 converts a radio signal received by the antenna 101 into a baseband signal (a reception signal), and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for processing by the processor 160. The processor 160 includes a baseband processor that performs modulation and demodulation, encoding and decoding and the like on the baseband signal, and a CPU (Central Processing Unit) that performs various types of processes by executing the program stored in the memory 150. The processor 160 may further includes a codec that performs encoding and decoding on sound and video signals. The processor 160 executes various types of processes and various types of communication protocols described later.

Fig. 3 is a block diagram of the eNB 200. As illustrated in Fig. 3, the eNB 200 includes an antenna 201, a radio transceiver 210, a network interface 220, a memory 230, and a processor 240. The memory 230 may be integrally formed with the processor 240, and this set (that is, a chipset) may be called a processor that constitutes the controller.

The antenna 201 and the radio transceiver 210 are used to transmit and receive a radio signal. The radio transceiver 210 converts a baseband signal (a transmission signal) output from the processor 240 into a radio signal, and transmits the radio signal from the antenna 201. Furthermore, the radio transceiver 210 converts a radio signal received by the antenna 201 into a baseband signal (a reception signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for processing by the processor 240. The processor 240 includes a baseband processor that performs modulation and demodulation, encoding and decoding and the like on the baseband signal and a CPU that performs various types of processes by executing the program stored in the memory 230. The processor 240 executes various types of processes and various types of communication protocols described later.

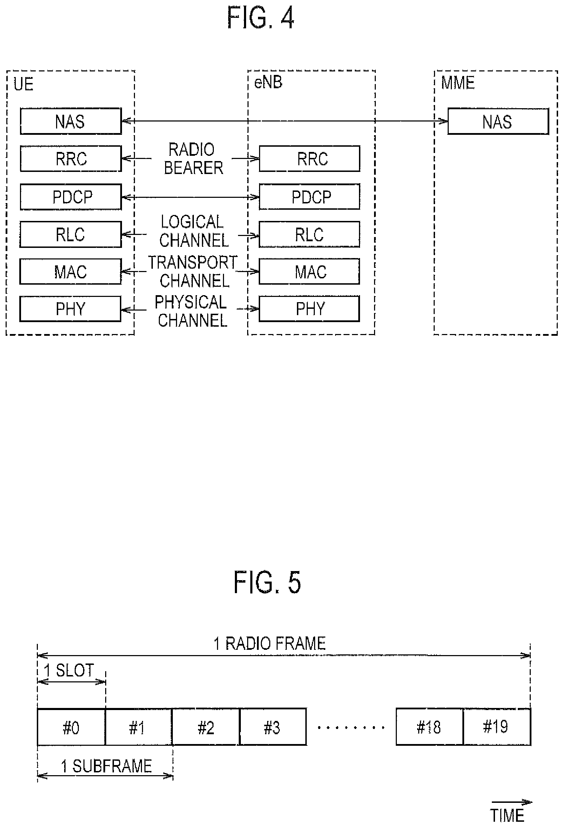

Fig. 4 is a protocol stack diagram of a radio interface in the LTE system. As illustrated in Fig. 4, the radio interface protocol is classified into a first layer to a third layer of an OSI reference model, such that the first layer is a physical (PHY) layer. The second layer includes a MAC (Medium Access Control) layer, an RLC (Radio Link Control) layer, and a PDCP (Packet Data Convergence Protocol) layer. The third layer includes an RRC (Radio Resource Control) layer.

The physical layer performs encoding and decoding, modulation and demodulation, antenna mapping and demapping, and resource mapping and demapping. Between the physical layer of the UE 100 and the physical layer of the eNB 200, user data and control signals are transmitted via a physical channel.

The MAC layer performs priority control of data and a retransmission process by a hybrid ARQ (HARQ) and the like. Between the MAC layer of the UE 100 and the MAC layer of the eNB 200, user data and control signals are transmitted via a transport channel. The MAC layer of the eNB 200 includes a scheduler for determining (scheduling) a transport format (a transport block size and a modulation and coding scheme) of an uplink and a downlink, and resource blocks to be assigned to the UE 100.

The RLC layer transmits data to an RLC layer of a reception side by using the functions of the MAC layer and the physical layer. Between the RLC layer of the UE 100 and the RLC layer of the eNB 200, user data and control signals are transmitted via a logical channel.

The PDCP layer performs header compression and decompression, and encryption and decryption.

The RRC layer is defined only in a control plane that handles control signals. Between the RRC layer of the UE 100 and the RRC layer of the eNB 200, a control signal (an RRC message) for various types of configurations is transmitted. The RRC layer controls a logical channel, a transport channel, and a physical channel according to the establishment, re-establishment, and release of a radio bearer. When there is a connection (an RRC connection) between the RRC of the UE 100 and the RRC of the eNB 200, the UE 100 is in an RRC connected state. Otherwise, the UE 100 is in an RRC idle state.

An NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiple Access) is applied to a downlink, and SC-FDMA (Single Carrier Frequency Division Multiple Access) is applied to an uplink, respectively.

As illustrated in Fig. 5, a radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each resource block includes a plurality of subcarriers in the frequency direction. One symbol and one subcarrier form a one resource element. Among the radio resources (time and frequency resources) assigned to the UE 100, a frequency resource can be identified by a resource block and a time resource can be identified by a subframe (or a slot).

### (D2D proximity service)

A D2D proximity service will be described, below. An LTE system according to an embodiment supports the D2D proximity service. The D2D proximity service is described in Non Patent Document 1, and an outline thereof will be described here.

The D2D proximity service (D2D ProSe) is a service enabling direct UE-to-UE communication within a synchronization cluster including a plurality of synchronized UEs 100. The D2D proximity service includes a D2D discovery procedure (Discovery) in which a proximal UE is discovered and D2D communication (Communication) that is direct UE-to-UE communication. The D2D communication is also called Direct communication.

A scenario in which all the UEs 100 forming the synchronization cluster are located in a cell coverage is called "In coverage". A scenario in which all the UEs 100 forming the synchronization cluster are located out of a cell coverage is called "Out of coverage". A scenario in which some UEs 100 in the synchronization cluster are located in a cell coverage and the remaining UEs 100 are located out of the cell coverage is called "Partial coverage".

In "In coverage", the eNB 200 is a D2D synchronization source, for example. A D2D non-synchronization source, from which a D2D synchronization signal is not transmitted, is synchronized with the D2D synchronization source. The eNB 200 that is a D2D synchronization source transmits, by a broadcast signal, D2D resource information indicating radio resources available for the D2D proximity service. The D2D resource information includes information indicating radio resources available for the D2D discovery procedure (Discovery resource information) and information indicating radio resources available for the D2D communication (Communication resource information), for example. The UE 100 that is a D2D non-synchronization source performs the D2D discovery procedure and the D2D communication on the basis of the D2D resource information received from the eNB 200.

In "Out of coverage" or "Partial coverage", the UE 100 is a D2D synchronization source, for example. In "Out of coverage", the UE 100 that is a D2D synchronization source transmits D2D resource information indicating radio resources available for the D2D proximity service, by a D2D synchronization signal, for example. The D2D synchronization signal is a signal transmitted in the D2D synchronization procedure in which a device-to-device synchronization is established. The D2D synchronization signal includes a D2DSS and a physical D2D synchronization channel (PD2DSCH). The D2DSS is a signal for providing a synchronization reference of a time and a frequency. The PD2DSCH is a physical channel through which more information can be conveyed than the D2DSS. The PD2DSCH conveys the above-described D2D resource information (the Discovery resource information and the Communication resource information). Alternatively, when the D2DSS is associated with the D2D resource information, the PD2DSCH may be rendered unnecessary.

The D2D synchronization signal includes a first D2D synchronization signal (D2DSSue_net), transmitted by the UE 100, in which a transmission timing reference of the D2D synchronization signal is the eNB 200, and a second D2D synchronization signal (D2DSSue_oon), transmitted by the UE 100, in which a transmission timing reference of the D2D synchronization signal is not the eNB 200.

In the D2D discovery procedure, a discovery signal for discovering a proximal terminal (hereinafter, "Discovery signal") is transmitted. Types of the D2D discovery procedure include: a first discovery scheme (Type 1 discovery) in which radio resources not uniquely assigned to the UE 100 are used for transmitting the Discovery signal; and a second discovery scheme (Type 2 discovery) in which radio resources uniquely assigned to each UE 100 are used for transmitting the Discovery signal. In the second discovery scheme, radio resources individually assigned to each transmission of the Discovery signal or radio resources semi-persistently assigned thereto are used.

Further, modes of the D2D communication include: a first mode (Mode 1) in which the eNB 200 or a relay node assigns radio resources for transmitting D2D data (D2D data and/or control data); and a second mode (Mode 2) in which the UE 100 itself selects the radio resource for transmitting the D2D data from the resource pool. The UE 100 performs the D2D communication in any mode thereof. For example, the UE 100 in the RRC connected state performs the D2D communication in the first mode, and the out-of-coverage UE 100 performs the D2D communication in the second mode.

Further, the UE 100 transmits a scheduling assignment (SA: Scheduling Assignment) indicating a location of the time-frequency resource for receiving data in the D2D communication, and another UE 100 knows the location of the time-frequency resource indicated by the SA to receive the data from the UE 100.

### (D2D synchronization signal)

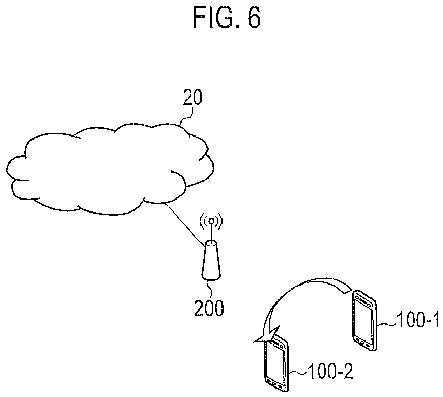

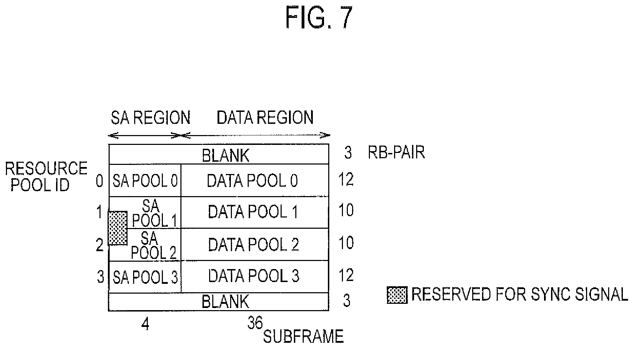

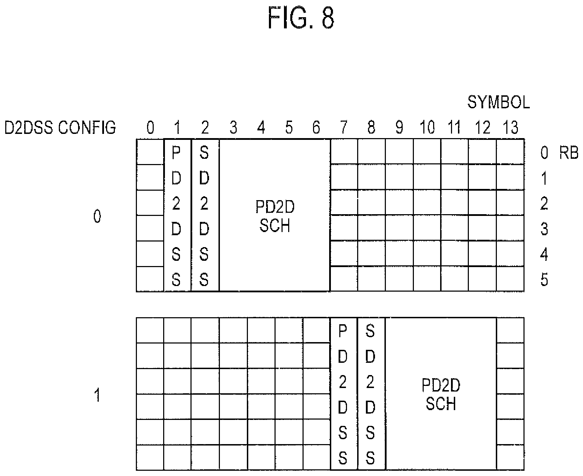

Next, a D2D synchronization signal will be described by using Fig. 6 to Fig. 8. Fig. 6 is a diagram illustrating a D2D synchronization signal according to the present embodiment. Fig. 7 and Fig. 8 are diagrams illustrating an arrangement of radio resources used for transmitting a D2D synchronization signal according to the present embodiment.

As illustrated in Fig. 6, a case is assumed where a UE 100-1 that is a D2D synchronization source transmits a D2D synchronization signal.

The UE 100-1 that is a D2D synchronization source uses radio resources for D2D communication (reception resource pool) as illustrated in Fig. 7. Specifically, the radio resource for D2D communication is divided, in a time direction, into an SA region and a data region. The widths in a time-frequency direction of radio resources for D2D communication and a cycle of radio resources for D2D communication are persistent. The width in the time direction of radio resources for D2D communication are preferably set at a multiple of at least 20 msec in order to support the VoIP.

The SA region is divided, in the frequency direction, into a plurality of SA resource pools (SA pools 0 to 3). For example, the width in the frequency direction of an SA resource pool is 10 RBs or 12 RBs, and the width in the time direction of an SA resource pool is four subframe.

The data region is divided, in the frequency direction, into a plurality of data resource pools (Data pools 0 to 3). For example, the width in the frequency direction of a data resource pool is 10 RBs or 12 RBs, and the width in the time direction of a data resource pool is 36 subframes.

Each of the plurality of SA resource pools and each of the plurality of data resource pools correspond in the time direction. For example, the SA resource pool 0 and the data resource pool 0 are made to correspond to each other by a resource pool ID "0".

In the radio resource for D2D communication, a radio resource pool (D2D synchronization pool) for transmitting a D2D synchronization signal is arranged in the SA resource region.

Specifically, the D2D synchronization pool is arranged in the time direction from a head symbol of the SA resource region to a predetermined symbol (for example, 0 to 13 symbols), and is arranged, in the frequency direction, over several RBs (for example, 6 RBs) in the center in the frequency direction of the radio resource for D2D communication. The cycle of the D2D synchronization pool may be persistent at 40 msec.

It is noted that in the radio resource for D2D communication in the second mode, a portion corresponding to the PUCCH in the first mode is bank.

Radio resources (a set of an SA region and a data region) for D2D communication, as illustrated in Fig. 7, may be provided in plural in the time direction.

As illustrated in Fig. 8, to the D2D synchronization pool, a D2D synchronization resource for transmitting a D2D synchronization signal is assigned. In the UE 100-1 that is a D2D synchronization source, a configuration for transmitting a D2D synchronization signal (D2DSS config.) is performed. In the present embodiment, as illustrated in Fig. 8, as the configuration for transmitting a D2D synchronization signal, there are two types of configuration which are different in location (specifically, have no overlapping) of the D2D synchronization resource in the time direction. In the first discover scheme, the UE 100-1 that is a D2D synchronization source selects either one of the configurations. To restrain interference between the D2D synchronization signals, the UE 100-1 may randomly select any one of the configurations, and may select a configuration that is not set by another D2D-synchronization-source UE on the basis of the D2D synchronization signal received from the other D2D-synchronization-source UE. Depending on each configuration, the time location of the D2D synchronization resource used differs. In the first discovery scheme, in the UE 100-1, a (prior) configuration for transmitting the D2D synchronization signal is performed by SIB or a dedicated RRC signaling. On the other hand, in the second discovery scheme, the UE 100-1 that is a D2D synchronization source selects either one of the configurations by an instruction from the eNB 200.

As described above, a D2D synchronization signal includes a D2DSS and a PD2DSCH. The D2DSS is a signal for providing a synchronization reference of a time and a frequency. In addition, the D2DSS is used for demodulating the PD2DSCH. The width in the time direction of the D2DSS is two symbols, for example.

The D2DSS includes PD2DSS and SD2DSS. The PD2DSS plays a role in much the same way as the PSS does, and the SD2DSS plays a role in much the same way as the SSS does. The PD2DSS is a primary synchronization signal in the D2D communication. The SD2DSS is a secondary synchronization signal in the D2D communication. The width in the time direction of the PD2DSS and the SD2DSS is one or two symbols, for example. In the time direction, the PD2DSS and the SD2DSS are arranged in this order.

The PD2DSCH carries D2D resource information. Specifically, the PD2DSCH includes information indicating a frequency bandwidth (for example, a resource pool ID) of radio resources for D2D communication. The information is desirably indicated by a small number of bits (for example, 3 bits). Further, the PD2DSCH includes information indicating a transmission resource pool used in the second mode.

The PD2DSCH may include information indicating whether or not information included in a D2D synchronization signal is information resulting from the eNB 200. The information can be indicated by 1 bit. The information resulting from the eNB 200 is information indicating a resource pool in the first mode and/or a resource pool in the second mode, for example. Further, the PD2DSCH may include information indicating the number of hops when information included in a D2D synchronization signal is transferred from another UE 100. It is noted that information included in a D2D synchronization signal is preferably not transferred.

The PD2DSCH may include information for indicating a CP length. The information can be indicated by 1 bit.

A signal sequence of the PD2DSCH differs depending on each type of configuration for transmitting a D2D synchronization signal. Thus, in accordance with the signal sequence of the PD2DSCH, it is possible to identify which resource is used for the D2D synchronization signal to be transmitted.

It is noted that the width in the time direction of the PD2DSCH is four symbols, for example.

It is noted that a reception resource pool used outside a coverage is previously regulated.

### (Operation according to embodiment)

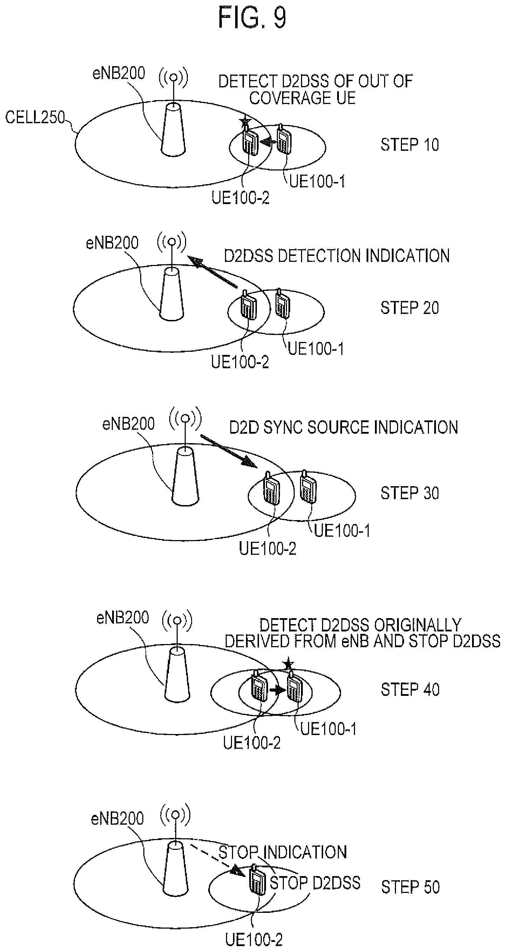

Next, an operation according to the embodiment will be described by using Fig. 9. Fig. 9 is an explanatory diagram illustrating an operation according to the embodiment.

As illustrated in Fig. 9, the UE 100-1 is located out of a cell 250 managed by the eNB 200 and is in an RRC idle state in the cell 250. On the other hand, a UE 100-2 is located in the cell 250, and is in an RRC connected state in the cell 250. Alternatively, the UE 100-2 may be in an RRC idle state.

Description proceeds with an assumption that the UE 100-2 monitors at least a D2D synchronization resource pool. The UE 100-2 may autonomously monitor a D2D synchronization resource pool in order to utilize a D2D proximity service or may monitor the same on the basis of an instruction from the eNB 200.

In such an operating environment, the following operation is performed.

In step S10, the UE 100-1 transmits a D2D synchronization signal. The UE 100-2 receives (detects) the D2D synchronization signal. The D2D synchronization signal here is a second D2D synchronization signal (D2DSSue_oon).

In step S20, the UE 100-2 transmits, to the eNB 200, detection information (D2DSS detection indication) indicating that the (second) D2D synchronization signal is detected. The UE 100-2 may transmit the detection information to the eNB 200 when a reception level (for example, a reception strength) of the received D2D synchronization signal is equal to or more than a predetermined value. The predetermined value is, for example, a value equal to or more than a received power value necessary for performing D2D communication.

Further, the UE 100-2 may transmit detection information to the eNB 200 when receiving a D2D synchronization signal from the UE 100 not located in the cell 250. Therefore, the UE 100-2 may not transmit detection information to the eNB 200 when receiving a D2D synchronization signal from the UE 100 located in the cell 250. For example, the UE 100-2 transmits detection information to the eNB 200 when flag information indicating that the UE 100 from which a D2D synchronization signal is transmitted is located out of the cell is included in the D2D synchronization signal.

Alternatively, the UE 100-2 may not transmit detection information to the eNB 200 when receiving a first D2D synchronization signal. The UE 100-2 is capable of determining, on the basis of whether or not a transmission timing of the received D2D synchronization signal is the eNB 200, whether the received D2D synchronization signal is the first D2D synchronization signal or the second D2D synchronization signal.

The detection information may include not only an identifier (for example, a C-RNTI) of the UE from which the detection information is transmitted, but also location information of the UE from which the detection information is transmitted, an identifier of the UE from which a D2D synchronization signal included in the received detection information is transmitted, received power of the D2D synchronization signal, etc.

The eNB 200 determines on the basis of the detection information received from the UE 100-2 whether or not to transmit configuration information for configuring the transmission source of the detection information to a D2D synchronization source. For example, the eNB 200 may determine to not transmit the configuration information when at least any one of the followings applies.

Firstly, the eNB 200 determines, for example, on the basis of location information of the UE from which detection information is transmitted, to not transmit configuration information, when, near the UE from which the detection information is transmitted, there is a UE that transmits another D2D synchronization signal.

Secondly, the eNB 200 determines to not transmit configuration information, when the UE from which a D2D synchronization signal is transmitted is located in the cell 250.

Thirdly, the eNB 200 determines to not transmit configuration information, when the received power of a D2D synchronization signal included in the detection information is equal or more than a predetermined value.

In step S30, the eNB 200 transmits, to the UE 100-2, an RRC message including configuration information (D2D Sync Source indication) for configuring the UE 100-2 to a D2D synchronization source.

The UE 100-2 performs configuration for transmitting a D2D synchronization signal, on the basis of the configuration information received from the eNB 200.

It is noted that the configuration information may include information indicating a transmission resource pool in the second mode. Further, the configuration information may include information for indicating a CP length.

In step S40, the UE 100-2 starts transmitting a D2D synchronization signal. The UE 100-1 receives the D2D synchronization signal from the UE 100-2. The D2D synchronization signal may include information indicating a transmission resource pool used in the second mode. It is noted that the D2D synchronization signal here is a first D2D synchronization signal (D2DSSue_net).

The UE 100-1 stops transmitting the D2D synchronization signal upon reception of the D2D synchronization signal from the UE 100-2. Alternatively, the UE 100-1 starts transmitting the first D2D synchronization signal instead of the second D2D synchronization signal. The UE 100-1 transmits the first D2D synchronization signal on the basis of the information included in the first D2D synchronization signal received from the UE 100-2. Alternatively, after stopping transmitting the second D2D synchronization signal, the UE 100-1 may start transmitting the D2D synchronization signal by the determination made by another UE out of the cell, located around the UE 100-1. When received a request to transmit the D2D synchronization signal including the second D2DSS from the other UE, the UE 100-1 may start transmitting the first D2D synchronization signal. For example, when not capable of receiving the D2D synchronization signal from the UE 100-2, the other UE requests the UE 100-1 to transmit the D2D synchronization signal.

Further, on the basis of the information included in the D2D synchronization signal from the UE 100-2, the UE 100-1 can know a transmission resource pool (SA resource pool and data resource pool) used in the second mode. The UE 100-1 can perform D2D communication by using the transmission resource pool during a synchronized period, on the basis of the D2D synchronization signal from the UE 100-2.

Description continues with an assumption that thereafter, the UE 100-1 moves in a direction apart from the UE 100-2.

In step S50, the UE 100-2 stops transmitting the D2D synchronization signal. A trigger used when the UE 100-2 stops transmitting the D2D synchronization signal includes a UE-based trigger and an eNB-based trigger.

Firstly, the UE-based trigger will be described. When at least any of the following conditions are satisfied, the UE 100-2 controls to stop transmitting the D2D synchronization signal.

Firstly, when a condition indicating leaving from the cell edge of the cell 250 is satisfied, the UE 100-2 stops transmitting the D2D synchronization signal. The condition is that a measurement result of the received signal from the cell 250 in the UE 100-2 exceeds a threshold value. Alternatively, the condition is that a measurement result of the received signal from another cell in the UE 100-2 exceeds a threshold value. The measurement result of the received signal is a measurement result of received power or a reception quality (measurement result of RSRP, RSRQ, SNR, etc.), for example. When the received power/reception quality from the cell 250 exceeds a threshold value, it is possible to determine that the UE 100-2 leaves from the cell edge and comes close to the eNB 200 (the center of the cell 250). This enables the UE 100-2 that transmits the D2D synchronization signal to reduce the interference applied to the eNB 200. Further, when the received power/reception quality from another cell exceeds a threshold value, it is possible to determine that the UE 100-2 leaves from the cell edge and comes close to the center of the other cell. This enables the UE 100-2 that transmits the D2D synchronization signal to reduce the interference applied to another eNB 200 that manages the other cell.

Secondly, when a predetermined time period passes since starting transmitting the D2D synchronization signal, the UE 100-2 stops transmitting the D2D synchronization signal. This enables restraining the UE 100-2 from continuously transmitting the D2D synchronization signal. The UE 100-2 may measure a predetermined time period on the basis of a time at which transmission of the D2D synchronization signal is actually started, and may measure a predetermined time period on the basis of reception of the configuration information from the eNB 200.

Thirdly, when a D2D related signal transmitted when the D2D proximity service is used is transmitted from the UE 100-2 and the number of other UEs located out of the cell 250 (hereinafter, out-of-cell D2D UEs) is less than a threshold value, the UE 100-2 stops transmitting the D2D synchronization signal. As a result, when there is no UE that uses the D2D proximity service around the UE 100-2, the UE 100-2 is capable of avoiding continuously transmitting the D2D synchronization signal.

When the D2D related signal (for example, the SA) includes information indicating that the UE from which the D2D related signal is transmitted does not exist in the cell (flag information indicating that the UE is located in the cell/flag information indicating that the UE is located out of the cell, etc.), the UE 100-2 counts the UE from which the D2D related signal is transmitted, as the out-of-cell D2D UE. Alternatively, when the time-frequency resource used for the D2D communication is assigned to another UE that does not exist in the cell 250, the UE 100-2 counts the number of other UEs that assign the time-frequency resource, as the number of the out-of-cell D2D UEs.

Here, the number of out-of-cell D2D UEs may be the number of out-of-cell D2D UEs per unit time. Further, the threshold value may be a numeral of 2 or more, or 1. When the threshold value is 1, the UE 100-2 may stop transmitting the D2D synchronization signal after a predetermined time period passes since receiving the D2D related signal from the out-of-cell D2D UE, and may stop transmitting the D2D synchronization signal when the number of out-of-cell D2D UEs is counted as 0.

It is noted that the D2D related signal may not only be the SA but also a D2D synchronization signal, a D2D discovery signal, or a D2D communication signal.

The UE 100-2 may transmit a transmission stop report of the D2D synchronization signal to the eNB 200 after stopping transmitting the D2D synchronization signal. This enables the eNB 200 to know that the UE 100-2 stops transmitting the D2D synchronization signal, and thus, the eNB 200 is capable of appropriately managing the user terminal that is a D2D synchronization source.

Next, the eNB-based trigger will be described. The UE 100-2 controls to stop transmitting the D2D synchronization signal when receiving a stop indication to stop transmitting the D2D synchronization signal from the eNB 200. The eNB 200 transmits the stop indication to the UE 100-2 when at least the following conditions are satisfied.

Firstly, when a condition indicating that the UE 100-2 leaves from the cell edge of the cell 250 is satisfied, the eNB 200 transmits the stop instruction. The condition is that in the eNB 200, a measurement result of the received signal from the UE 100-2 exceeds a threshold value. The measurement result of the received signal is a measurement result of received power or a reception quality (measurement result of RSRP, RSRQ, SNR, etc.), for example. Here, the received power is power of a radio signal received by the eNB 200 from the UE 100-2. For example, received power of a radio signal for cellular communication, interference power of a D2D related signal such as a D2D synchronization signal, etc., are listed.

Alternatively, the condition is that a measurement result of the received signal from the cell 250 included in the measurement report from the UE 100-2 exceeds a threshold value. In much the same way as in the above-described UE-based trigger, the eNB 200 transmits the stop instruction on the basis of the measurement report, when in the UE 100-2, the received power/reception quality from the cell 250 exceeds a threshold value.

It is noted that the UE 100 may transmit the measurement report on the basis of a periodical trigger, and may transmit the measurement report triggered by the measurement result of the received signal from the cell 250 exceeding a threshold value.

Thus, when the condition indicating that the UE 100-2 leaves from the cell edge of the cell 250 is satisfied, the eNB 200 transmits the stop instruction, as a result of which it is possible for the UE 100-2 that transmits the D2D synchronization signal to reduce the interference applied to the eNB 200.

Secondly, when receiving a request to cancel the configuration of the D2D synchronization source from the UE 100-2, the eNB 200 transmits the stop instruction. The UE 100-2 transmits the request to cancel the configuration when a remaining battery amount is less than a threshold value, for example. As a result, the eNB 200 transmits the stop instruction in response to the request from the UE 100-2 configured as the D2D synchronization source, and thus, the eNB 200 is capable of appropriately managing the user terminal that is a D2D synchronization source.

### [Other Embodiments]

In the embodiment described above, although an LTE system is described as an example of a mobile communication system, it is not limited to the LTE system, and the present invention may be applied to a system other than the LTE system.

### [Appendix]

Below, additional notes of the embodiments will be described.

### (D2DSS Hop support)

Proposal 1: When an out-of-coverage UE detects a D2DSS in D2DSSue_net then the out-of-coverage UE should not transmit any D2DSS in response or stop transmitting its own D2DSS.

### (Synchronization sequence design)

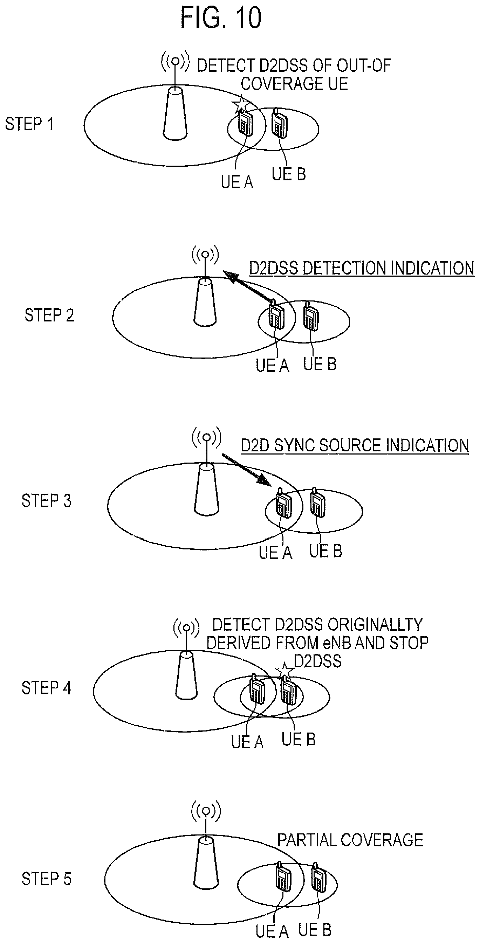

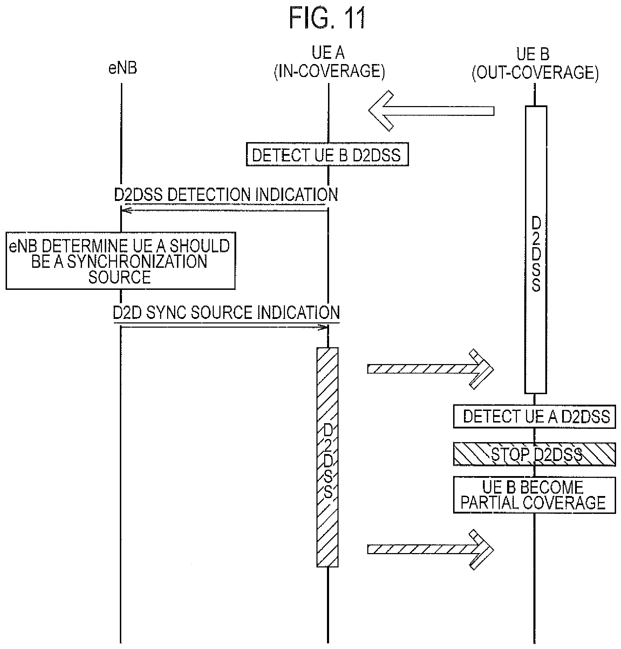

In the remaining paper we focus on the part of the agreement related to in-coverage. As stated in the agreement a UE can become a D2D Synchronization Source at least if it is configured to do so by the eNB. This implies there is a need of forwarding of the sync signal to out of coverage D2D UEs. However, an eNB is not aware which UE should be the D2D Synchronization Source for the out-of-coverage D2D UEs. We propose a mechanism to resolve this issue. Fig. 10 shows the procedure steps and Fig. 11 shows the signaling for the proposed procedure. The main concept is the in-coverage D2D UE first detects a D2DSS from an out-of-coverage D2D UE (Fig. 10, Step 1) and then reports to the serving eNB by sending a D2DSS detection indication (Fig. 10, Step 2).

Proposal 2: in-coverage D2D UE reports to the eNB the detection of a D2DSS from an out-of-coverage D2D UE by sending a D2DSS detection indication.

After receiving the D2DSS detection indication the eNB configures the same UE as the Synchronization Source that has reported the detection of D2DSS in D2DSSue_oon (Fig. 10, Step 3). In Fig. 10 Step 4 and 5 show how an out-of-coverage D2D UE handles the reception of the D2DSS from the in-coverage D2D UE. Fig. 11 provides some signaling details.

Step 1: UE A(in-coverage), UE B (out-of-coverage). In-coverage UE monitors D2DSS of out-of-coverage UE. For this example, UE A detect D2DSS of UE B.

Step 2: In-coverage UE which detects an out-of-coverage UE's D2DSS sends D2DSS detection indication to eNB. For example, UE A sends "D2DSS detection indication".

Step 3: eNB sends D2D Synchronization Source indication to UE A.

Step 4: When out-of-coverage UE detects the D2DSS in D2DSSue_net originally derived from eNB, that UEs stop transmitting its own D2DSS. For example, UE B stops transmitting the D2DSS.

Step 5: UE B follows UE A's D2DSS timing.

### (D2DSS OFF signal)

Current agreement is the eNB can configure UE to transmit a D2DSS. Similarly, we propose the eNB should be able to configure the UE to stop transmitting the D2DSS. In addition, if needed, the UE can autonomously stop transmitting D2DSS. Obviously, in this case the UE sends a D2DSS-OFF report to the eNB.

Proposal 3: The eNB should be able to configure the UE to stop transmitting D2DSS.

Proposal 4: If needed, the UE can autonomously stop transmitting D2DSS. As a result the UE sends a D2DSS-OFF report to the eNB.

### [Cross Reference]

The entire contents of U.S. Provisional Application No. 62/035110 (filed on August 8, 2014) are incorporated herein by reference.

### INDUSTRIAL APPLICABILITY

The present invention is useful for communication fields.

## Claims

1. A base station used in a mobile communication system that supports a D2D proximity service, comprising:
a transmitter that transmits an instruction to stop transmitting a D2D synchronization signal, to a user terminal which is located in a cell of the base station and is configured as a D2D synchronization source.

2. The base station according to claim 1, wherein the transmitter transmits the instruction to the user terminal when a condition is satisfied, the condition indicating that the user terminal leaves from a cell edge of the cell.

3. The base station according to claim 2, wherein the transmitter transmits the instruction to the user terminal when a measurement result of a received signal from the user terminal exceeds a threshold value.

4. The base station according to claim 2, wherein the transmitter transmits the instruction to the user terminal when a measurement result of a received signal from the cell exceeds a threshold value, the measurement result included in a measurement report from the user terminal.

5. The base station according to claim 1, further comprising:
a controller that configures the user terminal as the D2D synchronization source, wherein
the transmitter transmits the instruction to the user terminal when the base station receives, from the user terminal, a request for releasing a configuration of the D2D synchronization source.

6. A user terminal used in a mobile communication system that supports a D2D proximity service, comprising:
a controller that controls to start transmitting a D2D synchronization signal when the user terminal is located in a cell and is configured as a D2D synchronization source, wherein
the controller controls to stop transmitting the D2D synchronization signal when a predetermined condition is satisfied.

7. The user terminal according to claim 6, wherein the predetermined condition is a condition that the user terminal receives, from a base station managing the cell, an instruction to stop transmitting the D2D synchronization signal.

8. The user terminal according to claim 6, wherein the predetermined condition is a condition indicating that the user terminal leaves from a cell edge of the cell.

9. The user terminal according to claim 6, wherein the predetermined condition is that a measurement result of a received signal in the user terminal exceeds a threshold value, the received signal received from the cell.

10. The user terminal according to claim 6, wherein the predetermined condition is that a measurement result of a received signal in the user terminal exceeds a threshold value, the received signal received from other cell.

11. The user terminal according to claim 6, wherein the predetermined condition is that a predetermined time periods passes since starting transmitting the D2D synchronization signal.

12. The user terminal according to claim 6, wherein the predetermined condition is that number of other user terminals is less than a threshold value, wherein the other user terminals are transmission sources of D2D related signals received by the user terminal and are located out of the cell.

13. The user terminal according to claim 6, wherein the controller transmits a transmission stop report of the D2D synchronization signal to the cell after stopping transmitting the D2D synchronization signal.

14. A user terminal used in a mobile communication system that supports a D2D proximity service, comprising:
a controller that stops transmitting a D2D synchronization signal from the user terminal in response to receive other D2D synchronization signal derived from a base station while the user terminal is in out of cell coverage, and then synchronizes to the other D2D synchronization signal derived from the base station.
